# FASCICULE DE BREVET EUROPEEN

(11) **EP 3 527 485 B1**
(45) Date de publication et mention de la délivrance du brevet: **29.07.2020**
(21) Numéro de dépôt: 19156687.6
(22) Date de dépôt: 12.02.2019
(51) Int. Cl.: B64C 1/14, F16J 15/06, F16J 15/48

(54) **AERONEF COMPRENANT UNE PORTE DE SOUTE EQUIPEE D'UN SYSTEME D'ETANCHEITE AMELIORE**
LUFTFAHRZEUG UMFASSEND EINE FRACHTTÜRE MIT EINEM VERBESSERTEN DICHTUNGSSYSTEM
AIRCRAFT COMPRISING A CARGO DOOR EQUIPPED WITH AN IMPROVED SEALING SYSTEM

(30) Priorité: 19.02.2018 FR 1851418
(43) Date de publication de la demande: 21.08.2019
(73) Titulaire: Airbus Operations S.A.S., 31060 Toulouse (FR)
(72) Inventeur: CASSE, Christophe, 31150 FENOUILLET (FR); ALONSO, Lionel, 31770 COLOMIERS (FR)
(74) Mandataire: Gicquel, Olivier Yves Gérard

(56) Documents cités:
- DE-A1-102006 056 137
- DE-A1-102014 109 108
- US-A1- 2017 369 146

## Description

La présente demande se rapporte à un aéronef comprenant une porte de soute équipée d'un système d'étanchéité amélioré.

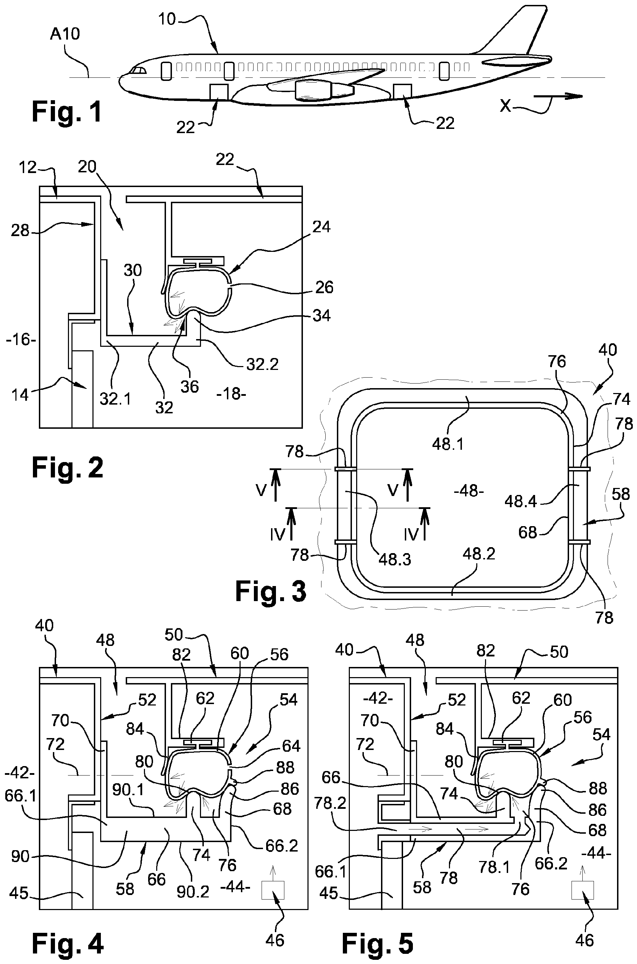

Comme illustré sur les figures 1 et 2, un fuselage 10 d'un aéronef comprend une structure constituée de renforts transversaux, appelés cadres, et de renforts longitudinaux, appelés lisses, ainsi qu'une peau 12 fixée sur la structure qui sépare l'intérieur et l'extérieur du fuselage.

Pour la suite de la description, la direction longitudinale référencée X est parallèle à un axe longitudinal A10 du fuselage qui s'étend de la pointe avant à la pointe arrière du fuselage. Un plan transversal est un plan perpendiculaire à l'axe longitudinal A10. Un plan longitudinal est un plan passant par l'axe longitudinal A10.

L'intérieur du fuselage 10 est compartimenté par au moins une cloison 14 et comprend au moins une première zone 16, comme par exemple une cabine, et au moins une deuxième zone 18, comme par exemple une soute, séparées par la cloison 14. Pour permettre l'accès à l'intérieur de la deuxième zone 18 depuis l'extérieur de l'aéronef, le fuselage 10 comprend au moins une ouverture 20 et une porte 22 mobile entre une position ouverture dans laquelle elle dégage au moins partiellement l'ouverture 20 et une position fermée dans laquelle elle obture l'ouverture.

La porte 22 comprend un joint d'étanchéité périphérique 24, positionné au niveau de sa face intérieure, qui s'étend sur tout le pourtour de la porte. Selon un mode de réalisation, le joint d'étanchéité périphérique 24 comprend un corps cylindrique creux qui présente des orifices 26 permettant de faire communiquer l'intérieur du corps cylindrique creux avec l'intérieur de la deuxième zone 18 du fuselage 10.

Le fuselage 10 comprend un cadre de porte 28 relié à la structure du fuselage 10 ainsi qu'une butée 30 qui comporte :
- un corps 32 sous la forme d'une plaque qui s'étend sur toute la périphérie du cadre de porte 28, vers l'intérieur de l'ouverture 20, parallèlement à la porte 22 lorsque cette dernière est en position fermée et qui présente un premier bord 32.1 fixé au cadre de porte 28 et un deuxième bord libre 32.2 délimitant l'ouverture 20,
- une nervure 34, perpendiculaire au corps 32, en saillie vers l'extérieur du fuselage 10, positionnée au niveau du deuxième bord libre 32.2, qui s'étend sur toute la périphérie du cadre de porte 28.

Le corps 32 et la nervure 34 sont positionnés de manière à comprimer le joint d'étanchéité périphérique 24 solidaire de la porte 22 lorsque cette dernière est en position fermée.

La deuxième zone 18 est équipée d'un système d'extinction d'incendie. En cas d'incendie en vol, le système d'extinction d'incendie sature la deuxième zone 18 avec un gaz approprié pour étouffer l'incendie, comme par exemple un gaz halon. Durant le reste du vol, jusqu'à l'atterrissage, le système d'extinction d'incendie doit maintenir une concentration en gaz au-dessus d'une valeur donnée dans la deuxième zone 18 pour maintenir l'incendie étouffé.

En raison d'une fuite de gaz 36 entre le joint d'étanchéité périphérique 24 et la nervure 32, le système d'extinction d'incendie comprend une réserve de gaz supplémentaire pour décharger lentement du gaz à l'intérieur de la deuxième zone 18 et maintenir la concentration du gaz au-dessus de la valeur donnée. Cette réserve de gaz supplémentaire conduit à augmenter la masse embarquée de l'aéronef. DE 10 2006 056137 A1 divulgue un aéronef comprenant un système d'étanchéité entre une porte mobile et un cadre de porte.

La présente invention vise à remédier aux inconvénients de l'art antérieur.

A cet effet, l'invention a pour objet un aéronef comprenant un fuselage, des première et deuxième zones situées à l'intérieur du fuselage et séparées par une cloison, une ouverture entourée d'un cadre de porte et configurée pour permettre d'accéder à la deuxième zone depuis l'extérieur du fuselage, une porte mobile entre une position ouverte et une position fermée dans laquelle elle obture l'ouverture ainsi qu'un système d'étanchéité, intercalé entre le cadre de porte et la porte, comprenant :
- un joint d'étanchéité périphérique solidaire de la porte, s'étendant sur le pourtour de la porte,
- une butée solidaire du cadre de porte, comportant un corps sous la forme d'au moins une plaque qui s'étend sur le pourtour du cadre de porte, parallèlement à la porte lorsque cette dernière est en position fermée, présentant un premier bord relié au cadre de porte et un deuxième bord libre délimitant l'ouverture.

Selon l'invention, la butée comprend :
- une gorge périphérique positionnée de manière à ce que le joint d'étanchéité périphérique obture la gorge périphérique sur le pourtour de l'ouverture lorsque la porte est en position fermée,
- au moins un conduit configuré pour faire communiquer la gorge périphérique et la première zone.

Cette conception permet, en cas d'incident, de maintenir la concentration du gaz injecté par le système d'extinction d'incendie dans la deuxième zone en diminuant le besoin de décharger lentement du gaz à l'intérieur de la deuxième zone pour compenser d'éventuelles fuites. Par conséquent, le réservoir de gaz supplémentaire assurant une décharge lente du gaz est fortement diminué permettant ainsi de réduire la masse embarquée.

Selon une autre caractéristique, la butée comprend des première et deuxième nervures, solidaires du corps, en saillie vers l'extérieur du fuselage par rapport au corps, s'étendant sur toute la périphérie du cadre de porte, espacées de manière à délimiter avec le corps la gorge périphérique.

Selon une autre caractéristique, la première nervure est positionnée au niveau du deuxième bord du corps de la butée, a une hauteur supérieure à la deuxième nervure et comprend une partie supérieure, distante de la butée, inclinée vers l'intérieur de l'ouverture.

Selon une autre caractéristique, le joint d'étanchéité périphérique comprend au moins une nervure extérieure, en saillie par rapport à la surface extérieure du joint d'étanchéité périphérique, configurée pour limiter l'enfoncement du joint d'étanchéité périphérique dans la gorge périphérique.

Selon une configuration, la nervure extérieure du joint d'étanchéité périphérique est configurée pour prendre appui contre la partie supérieure de la première nervure.

Selon une autre caractéristique, le joint d'étanchéité périphérique comprend un corps cylindrique creux présentant au moins un orifice pour faire communiquer l'intérieur du corps cylindrique creux avec l'intérieur de la deuxième zone du fuselage.

Selon une configuration, l'ouverture comprend un bord supérieur disposé dans un premier plan longitudinal, un bord inférieur disposé dans un deuxième plan longitudinal, des premier et deuxième bords latéraux disposés dans des plans transversaux; et la butée comprend deux conduits positionnés au niveau du premier bord latéral et deux conduits positionnés au niveau du deuxième bord latéral.

Selon un mode de réalisation, la butée comprend au moins une plaque présentant une première face orientée vers l'extérieur du fuselage et une deuxième face orientée vers l'intérieur du fuselage, chaque conduit étant positionné dans un bourrelet prévu sur la deuxième face.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe schématique d'un système d'étanchéité d'une porte d'aéronef qui illustre un mode de réalisation de l'art antérieur,
- La figure 3 est une vue de face d'une ouverture ménagée dans un fuselage d'aéronef qui illustre un premier mode de réalisation de l'invention,
- La figure 4 est une coupe schématique, au niveau de la ligne IV-IV de la figure 3, d'un système d'étanchéité d'une porte d'aéronef qui illustre le premier mode de réalisation de l'invention,
- La figure 5 est une coupe schématique, au niveau de la ligne V-V de la figure 3, d'un système d'étanchéité d'une porte d'aéronef qui illustre le premier mode de réalisation de l'invention,
- La figure 6 est une vue en perspective d'un bord latéral de l'ouverture visible sur la figure 3,
- La figure 7 est une vue en perspective d'un angle de l'ouverture visible sur la figure 3,
- La figure 8 est une coupe en perspective d'une butée du système d'étanchéité qui illustre le premier mode de réalisation de l'invention,
- La figure 9 est une vue en perspective d'une alimentation en air d'un système d'étanchéité d'une porte d'aéronef qui illustre le premier mode de réalisation de l'invention,
- La figure 10 est une coupe schématique d'un système d'étanchéité d'une porte d'aéronef qui illustre un deuxième mode de réalisation de l'invention, et
- La figure 11 est une coupe schématique d'un système d'étanchéité d'une porte d'aéronef qui illustre un troisième mode de réalisation de l'invention.

Sur les figures 4 à 7, on a représenté un fuselage 40 d'un aéronef qui comprend, à l'intérieur du fuselage 40, au moins une première zone 42 et au moins une deuxième zone 44 séparées par au moins une cloison 45.

Selon une configuration, la première zone 42 est une cabine dans laquelle sont installées des personnes. La deuxième zone 44 est une soute configurée pour stocker des bagages ou toutes autres marchandises.

La deuxième zone 44 est équipée d'un système d'extinction d'incendie 46 configuré pour injecter un gaz approprié pour étouffer un incendie, comme par exemple un gaz halon, dans la deuxième zone 44.

Le fuselage 40 comprend au moins une ouverture 48 pour permettre d'accéder à la deuxième zone 44 depuis l'extérieur du fuselage 40 ainsi qu'une porte 50 mobile entre une position ouverture dans laquelle elle dégage au moins partiellement l'ouverture 48 et une position fermée dans laquelle elle obture l'ouverture 48.

Le fuselage 40 comprend un cadre de porte 52 relié à la structure du fuselage 40 qui entoure l'ouverture 48 ainsi qu'au moins une articulation configurée pour permettre à la porte 50 de bouger entre la position ouverte et la position fermée.

Le fuselage 40, les première et deuxième zone 42, 44, la cloison 45, le système d'extinction d'incendie 46, la porte 50, son articulation et le cadre de porte 52 ne sont pas plus décrits car ils peuvent être identiques à ceux de l'art antérieur.

Le fuselage 40 comprend un système d'étanchéité 54, intercalé entre la porte 50 et le cadre de porte, qui comporte :
- un joint d'étanchéité périphérique 56 solidaire de la porte 50, positionné au niveau d'une face interne de la porte 50 (orientée vers l'intérieur du fuselage 40), qui s'étend surtout le pourtour de la porte 50,
- une butée 58 qui délimite l'ouverture 48 et qui s'étend sur toute la périphérie du cadre de porte 52, vers l'intérieur de l'ouverture 48.

Selon un mode de réalisation, le joint d'étanchéité périphérique 56 comprend un corps cylindrique creux 60 et un système de fixation 62 configuré pour relier le corps cylindrique creux 60 et la porte 50.

Le corps cylindrique creux 60 présente au moins un orifice 64 pour faire communiquer l'intérieur du corps cylindrique creux 60 avec l'intérieur de la deuxième zone 44 du fuselage 40.

Le joint d'étanchéité périphérique 56 est en un matériau lui permettant de se déformer (plus particulièrement de s'écraser) de manière élastique.

La butée 58 comprend :
- un corps 66, sous la forme d'au moins une plaque, qui s'étend sur tout le pourtour du cadre de porte 52, parallèlement à la porte 50 lorsque cette dernière est en position fermée et qui présente un premier bord 66.1 relié au cadre de porte 52 et un deuxième bord libre 66.2 délimitant l'ouverture 48,
- une première nervure 68, solidaire du corps 66, en saillie vers l'extérieur du fuselage 30 par rapport au corps 66, qui s'étend sur toute la périphérie du cadre de porte 52.

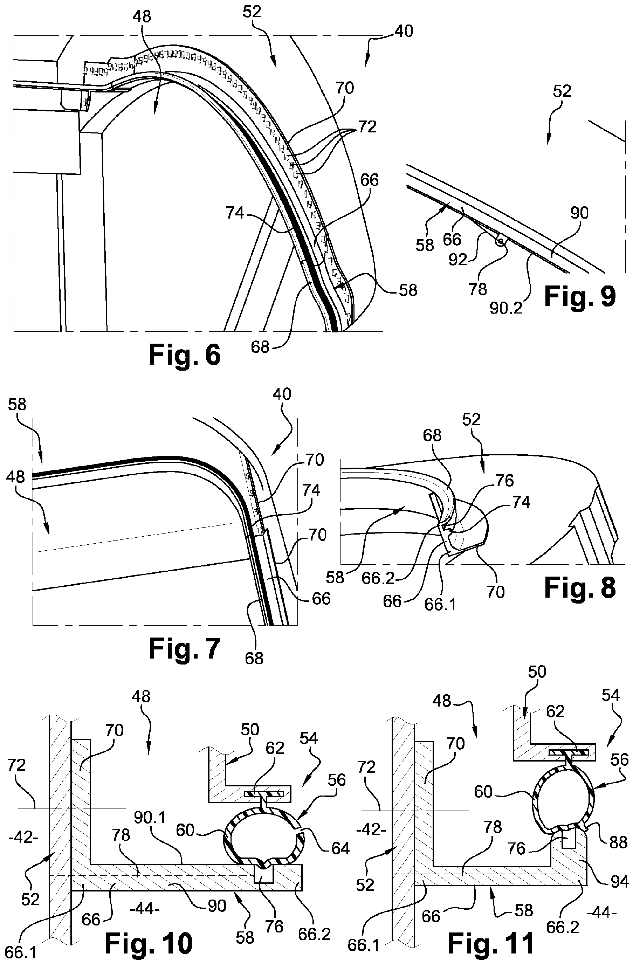

Selon un mode de réalisation, pour assurer la liaison entre la butée 58 et le cadre de porte 52, la butée 58 comprend une aile 70, solidaire du corps 66 au niveau du premier bord 66.1, plaquée contre le cadre de porte 52, une pluralité de fixations 72 (visibles sur la figure 6) assurant la liaison entre l'aile 70 et le cadre de porte 52.

Selon une caractéristique de l'invention, la butée 58 comprend une deuxième nervure 74 solidaire du corps 66, en saillie vers l'extérieur du fuselage 40 par rapport au corps 66, qui s'étend sur toute la périphérie du cadre de porte 52, décalée par rapport à la première nervure 68 vers le premier bord 66.1.

Les première et deuxième nervures 68, 74 sont espacées de manière à délimiter avec le corps 66 une gorge périphérique 76.

Le corps 66 et les première et deuxième nervures 68, 74 sont positionnés de manière à ce que le joint d'étanchéité périphérique 56 solidaire de la porte 50 soit comprimé contre les première et deuxième nervures 68, 74 et obture la gorge périphérique 76 lorsque la porte 50 est en position fermée.

Selon une autre caractéristique de l'invention, la gorge périphérique 76 communique avec la première zone 42. A cet effet, la butée 58 comprend au moins un conduit 78 présentant une première extrémité 78.1, qui débouche dans la gorge périphérique 76, et une deuxième extrémité 78.2 qui débouche dans la première zone 42.

En cas d'incident, ce n'est pas le gaz propulsé par le système d'extinction d'incendie 46 qui fuit vers l'extérieur de l'aéronef mais l'air présent dans la gorge périphérique 76 et provenant de la première zone 42 qui fuit vers l'extérieur via un éventuel chemin de fuite 80.

Les première et deuxième zones 42, 44 étant initialement à la même pression, le fait d'injecter un gaz dans la deuxième zone 44 tend à augmenter la pression dans la deuxième zone 44 et à l'intérieur du corps cylindrique creux 60 du joint d'étanchéité périphérique 56, générant ainsi une différence de pression entre le gaz présent à l'intérieur du corps cylindrique creux 60 et l'air présent dans la gorge périphérique 76. Cette différence de pression augmente la pression de plaquage du joint d'étanchéité périphérique 56 sur les première et deuxième nervures 68, 74 de la butée 58 ce qui tend à réduire les risques de fuite.

Comme illustré sur les figures 3 et 4, le système d'étanchéité 54 comprend au moins un système pour positionner correctement le corps cylindrique creux 60 du joint d'étanchéité périphérique 56 par rapport aux première et deuxième nervures 68, 74 de la butée 58.

Selon un mode de réalisation, la porte 50 comprend une semelle 82 sur laquelle est rapporté le joint d'étanchéité périphérique 56 ainsi qu'une aile 84, qui s'étend vers l'intérieur du fuselage à partir de la semelle 82, ladite aile 84 étant configurée pour limiter les déformations du corps cylindrique creux 60 du joint d'étanchéité périphérique 56 vers le cadre de porte 52.

Selon un mode de réalisation, la première nervure 68 a une hauteur supérieure à la deuxième nervure 74 et comprend une partie supérieure 86 (distante de la butée 58) inclinée vers l'intérieur de l'ouverture 48. Cette inclinaison favorise le positionnement du joint d'étanchéité périphérique 56 entre les première et deuxième nervures 68, 74 et augmente la surface de contact entre le joint d'étanchéité périphérique 56 et la première nervure 68, ce qui tend à réduire les risques de fuite entre la deuxième zone 44 et la gorge périphérique 76. Lorsque la porte 50 est en position fermée, le joint d'étanchéité périphérique 56 est immobilisé entre l'aile 84 et la partie supérieure 86 de la première nervure 68.

Le joint d'étanchéité périphérique 56 comprend au moins une nervure extérieure 88, qui s'étend sur toute la longueur dudit joint, en saillie par rapport à la surface extérieure du joint d'étanchéité périphérique 56 et orientée vers le centre de l'ouverture 48. Cette nervure extérieure 88 est configurée pour prendre appui contre la partie supérieure 86 de la première nervure 68 et limiter l'enfoncement du joint d'étanchéité périphérique 56 dans la gorge périphérique 76.

Selon un autre point, l'inclinaison de la partie supérieure 86 de la première nervure 68 et la nervure extérieure 88 du joint d'étanchéité périphérique 56 augmentent le chemin de fuite entre le joint d'étanchéité périphérique 56 et la première nervure 68 ce qui tend à réduire les risques de fuite entre la deuxième zone 44 et la gorge périphérique 76.

Selon une configuration visible sur la figure 3, l'ouverture 48 comprend un bord supérieur 48.1 disposé dans un premier plan longitudinal, un bord inférieur 48.2 disposé dans un deuxième plan longitudinal, des premier et deuxième bords latéraux 48.3, 48.4 disposés dans des plans transversaux, les bords 48.1 à 48.4 étant reliés par des angles arrondis, comme illustré sur la figure 7.

Selon cette configuration, le système d'étanchéité 54 comprend quatre conduits 78, deux conduits 78 positionnés au niveau du premier bord latéral 48.3 et deux autres conduits 78 positionnés au niveau du deuxième bord latéral 48.4.

Selon un mode de réalisation, la butée 58 comprend au moins une plaque 90 qui comprend une première face 90.1, orientée vers l'extérieur du fuselage 40, au niveau de laquelle sont prévues les première et deuxième nervures 68, 74 ; et une deuxième face 90.2, orientée vers l'intérieur du fuselage. Cette plaque 90 peut être plane au niveau des bords supérieur et inférieur 48.1, 48.2 de l'ouverture 48, comme illustré sur la figure 7, et être courbe au niveau des premier et deuxième bords latéraux pour s'adapter à la courbure du fuselage 40, comme illustré sur les figures 6 et 8.

Selon un mode de réalisation visible sur la figure 9, chaque conduit 78 est positionné dans un bourrelet 92 prévu sur la deuxième face 90.2 de la plaque 90 de la butée 58.

Le corps 66, les première et deuxième nervures 68, 74, l'aile 70 et le bourrelet 92 peuvent être réalisés d'un seul tenant et former une unique pièce métallique ou en matériau composite.

Selon un mode de réalisation, la butée 58 comprend plusieurs tronçons disposés bout à bout. Selon un deuxième mode de réalisation visible sur la figure 10, la butée 58 ne comprend aucune nervure. Elle comporte un corps 66 sous la forme d'une plaque 90 qui présente sur l'une de ses faces 90.1 une gorge périphérique 76, qui communique avec la première zone 42, positionnée de manière à ce que le joint d'étanchéité périphérique 56 obture la gorge périphérique 76 sur tout le pourtour de l'ouverture 48 lorsque la porte 50 est en position fermée.

Selon un troisième mode de réalisation visible sur la figure 11, la butée 58 comprend une unique nervure 94 qui présente au niveau de son bord supérieur une gorge périphérique 76 qui communique avec la première zone 42. La nervure 94 est positionnée de manière à ce que le joint d'étanchéité périphérique 56 obture la gorge périphérique 76 sur tout le pourtour de l'ouverture 48.

Le système d'étanchéité 54 peut aussi bien se monter sur les aéronefs existants que les nouveaux.

De manière simple et efficace, il permet de maintenir la concentration du gaz injecté par le système d'extinction d'incendie 46 dans la deuxième zone 44 en diminuant le besoin de décharger lentement du gaz à l'intérieur de la deuxième zone 44 pour compenser d'éventuelles fuites. Par conséquent, le réservoir de gaz supplémentaire assurant une décharge lente du gaz est fortement diminué, voire supprimé, permettant ainsi de réduire la masse embarquée.

## Revendications

1. Aéronef comprenant un fuselage (40), des première et deuxième zones (42, 44) situées à l'intérieur du fuselage (40) et séparées par une cloison (45), une ouverture (48) entourée d'un cadre de porte (52) et configurée pour permettre d'accéder à la deuxième zone (44) depuis l'extérieur du fuselage (40), une porte (50) mobile entre une position ouverte et une position fermée dans laquelle elle obture l'ouverture (48) ainsi qu'un système d'étanchéité (54), intercalé entre le cadre de porte (52) et la porte (50), comprenant :
- un joint d'étanchéité périphérique (56) solidaire de la porte (50), s'étendant sur le pourtour de la porte (50),
- une butée (58) solidaire du cadre de porte (52), comportant un corps (66) sous la forme d'au moins une plaque qui s'étend sur le pourtour du cadre de porte (52), parallèlement à la porte (50) lorsque cette dernière est en position fermée, présentant un premier bord (66.1) relié au cadre de porte (52) et un deuxième bord libre (66.2) délimitant l'ouverture (48), tel que la butée (58) comprend une gorge périphérique (76) positionnée de manière à ce que le joint d'étanchéité périphérique (56) obture la gorge périphérique (76) sur le pourtour de l'ouverture (48) lorsque la porte (50) est en position fermée ainsi qu'au moins un conduit (78) configuré pour faire communiquer la gorge périphérique (76) et la première zone (42).

2. Aéronef selon la revendication 1, **caractérisé en ce que** la butée (58) comprend des première et deuxième nervures (68, 74), solidaires du corps (66), en saillie vers l'extérieur du fuselage (40) par rapport au corps (66), s'étendant sur toute la périphérie du cadre de porte (52), espacées de manière à délimiter avec le corps (66) la gorge périphérique (76).

3. Aéronef selon la revendication 2, **caractérisé en ce que** la première nervure (68) est positionnée au niveau du deuxième bord (66.2) du corps (66) de la butée (58), a une hauteur supérieure à la deuxième nervure (74) et comprend une partie supérieure (86), distante de la butée (58), inclinée vers l'intérieur de l'ouverture (48).

4. Aéronef selon l'une des revendications précédentes, **caractérisé en ce que** le joint d'étanchéité périphérique (56) comprend au moins une nervure extérieure (88), en saillie par rapport à la surface extérieure du joint d'étanchéité périphérique (56), configurée pour limiter l'enfoncement du joint d'étanchéité périphérique (56) dans la gorge périphérique (76).

5. Aéronef selon les revendications 3 et 4, **caractérisé en ce que** la nervure extérieure (88) du joint d'étanchéité périphérique (56) est configurée pour prendre appui contre la partie supérieure (86) de la première nervure (68).

6. Aéronef selon l'une des revendications précédentes, **caractérisé en ce que** le joint d'étanchéité périphérique (56) comprend un corps cylindrique creux (60) présentant au moins un orifice (64) pour faire communiquer l'intérieur du corps cylindrique creux (60) avec l'intérieur de la deuxième zone (44) du fuselage (40).

7. Aéronef selon l'une des revendications précédentes, **caractérisé en ce que** l'ouverture (48) comprend un bord supérieur (48.1) disposé dans un premier plan longitudinal, un bord inférieur (48.2) disposé dans un deuxième plan longitudinal, des premier et deuxième bords latéraux (48.3, 48.4) disposés dans des plans transversaux et **en ce que** la butée (58) comprend deux conduits (78) positionnés au niveau du premier bord latéral (48.3) et deux conduits (78) positionnés au niveau du deuxième bord latéral (48.4).

8. Aéronef selon l'une des revendications précédentes, **caractérisé en ce que** la butée (58) comprend au moins une plaque (90) présentant une première face (90.1) orientée vers l'extérieur du fuselage (30) et une deuxième face (90.2) orientée vers l'intérieur du fuselage, chaque conduit (78) étant positionné dans un bourrelet (92) prévu sur la deuxième face (90.2).

## Patentansprüche

1. Luftfahrzeug, das Folgendes beinhaltet: einen Rumpf (40), einen ersten und zweiten Bereich (42, 44), die sich im Inneren des Rumpfes (40) befinden und durch eine Trennwand (45) getrennt sind, eine Öffnung (48), die von einem Türrahmen (52) umgeben ist und dazu konfiguriert ist, den Zugang zu dem zweiten Bereich (44) von außerhalb des Rumpfes (40) zu gestatten, eine Tür (50), die zwischen einer offenen Position und einer geschlossenen Position, in der sie die Öffnung abdichtet (48), bewegbar ist, sowie ein Dichtungssystem (54), das zwischen dem Türrahmen (52) und der Tür (50) eingefügt ist und Folgendes beinhaltet:
- eine umlaufende Dichtung (56), die fest an der Tür (50) angebracht ist und sich über den Umfang der Tür (50) erstreckt,
- einen Anschlag (58), der fest an dem Türrahmen (52) angebracht ist, der einen Körper (66) in Form mindestens einer Platte umfasst, die sich über den Umfang des Türrahmens (52) parallel zu der Tür (50), wenn sich diese in der geschlossenen Position befindet, erstreckt, und der einen ersten Rand (66.1), der mit dem Türrahmen (52) verbunden ist, und einen freien zweiten Rand (66.2), der die Öffnung (48) abgrenzt, aufweist,
derart, dass der Anschlag (58) eine umlaufende Nut (76), die so positioniert ist, dass die umlaufende Dichtung (56) die umlaufende Nut (76) über den Umfang der Öffnung (48) abdichtet, wenn sich die Tür (50) in der geschlossenen Position befindet, sowie mindestens einen Kanal (78), der dazu konfiguriert ist, die umlaufende Nut (76) und den ersten Bereich (42) miteinander kommunizieren zu lassen, beinhaltet.

2. Luftfahrzeug nach Anspruch 1, **dadurch gekennzeichnet, dass** der Anschlag (58) eine erste und zweite Rippe (68, 74) beinhaltet, die fest an dem Körper (66) angebracht sind, die mit Bezug auf den Körper (66) zur Außenseite des Rumpfes (40) hin vorspringen, die sich über den gesamten Umfang des Türrahmens (52) erstrecken und die so beabstandet sind, dass sie mit dem Körper (66) die umlaufende Nut (76) abgrenzen.

3. Luftfahrzeug nach Anspruch 2, **dadurch gekennzeichnet, dass** die erste Rippe (68) im Bereich des zweiten Rands (66.2) des Körpers (66) des Anschlags (58) positioniert ist, eine Höhe größer als die der zweiten Rippe (74) aufweist und einen oberen, von dem Anschlag (58) entfernten Abschnitt (86) beinhaltet, der zur Innenseite der Öffnung (48) hin geneigt ist.

4. Luftfahrzeug nach einem der vorhergehenden Ansprüche, **dadurch gekennzeichnet, dass** die umlaufende Dichtung (56) mindestens eine äußere Rippe (88) beinhaltet, die mit Bezug auf die äußere Oberfläche der umlaufenden Dichtung (56) vorspringt, die dazu konfiguriert ist, das Eintreten der umlaufenden Dichtung (56) in die umlaufende Nut (76) zu begrenzen.

5. Luftfahrzeug nach den Ansprüchen 3 und 4, **dadurch gekennzeichnet, dass** die äußere Rippe (88) der umlaufenden Dichtung (56) dazu konfiguriert ist, an dem oberen Abschnitt (86) der ersten Rippe (68) anzuliegen.

6. Luftfahrzeug nach einem der vorhergehenden Ansprüche, **dadurch gekennzeichnet, dass** die umlaufende Dichtung (56) einen hohlen zylindrischen Körper (60) beinhaltet, der mindestens eine Durchgangsöffnung (64) aufweist, um das Innere des hohlen zylindrischen Körpers (60) mit dem Inneren des zweiten Bereichs (44) des Rumpfes (40) kommunizieren zu lassen.

7. Luftfahrzeug nach einem der vorhergehenden Ansprüche, **dadurch gekennzeichnet, dass** die Öffnung (48) einen oberen Rand (48.1), der in einer ersten Längsebene angeordnet ist, einen unteren Rand (48.2), der in einer zweiten Längsebene angeordnet ist, einen ersten und zweiten Seitenrand (48.3, 48.4), die in Querebenen angeordnet sind, beinhaltet und dass der Anschlag (58) zwei Kanäle (78), die im Bereich des ersten Seitenrands (48.3) positioniert sind, und zwei Kanäle (78), die im Bereich des zweiten Seitenrands (48.4) positioniert sind, beinhaltet.

8. Luftfahrzeug nach einem der vorhergehenden Ansprüche, **dadurch gekennzeichnet, dass** der Anschlag (58) mindestens eine Platte (90) beinhaltet, die eine erste Fläche (90.1), die zur Außenseite des Rumpfes (30) hin ausgerichtet ist, und eine zweite Fläche (90.2), die zur Innenseite des Rumpfes hin ausgerichtet ist, aufweist, wobei jeder Kanal (78) in einem Wulst (92), der an der zweiten Fläche (90.2) vorgesehen ist, positioniert ist.

## Claims

1. Aircraft comprising a fuselage (40), first and second zones (42, 44) located inside the fuselage (40) and separated by a partition (45), an opening (48) surrounded by a door frame (52) and configured to allow access to the second zone (44) from inside the fuselage (40), a door (50) that is able to move between an open position and a closed position in which it blocks the opening (48), and a sealing system (54) interposed between the door frame (52) and the door (50), comprising:
- a peripheral seal (56) secured to the door (50) and extends over the perimeter of the door (50),
- an abutment (58) secured to the door frame (52), comprising a body (66) in the form of at least one plate which extends around the perimeter of the door frame (52), parallel to the door (50) when the latter is in the closed position, having a first edge (66.1) connected to the door frame (52) and a second, free edge (66.2) delimiting the opening (48),
such that the abutment (58) comprises a peripheral channel (76) positioned such that the peripheral seal (56) blocks the peripheral channel (76) around a perimeter of the opening (48) when the door (50) is in the closed position, and at least one duct (78) that is configured to establish communication between the peripheral channel (76) and the first zone (42).

2. Aircraft according to Claim 1, **characterized in that** the abutment (58) comprises first and second ribs (68, 74) that are secured to the body (66) and project towards the outside of the fuselage (40) with respect to the body (66), extending over the entire periphery of the door frame (52), and spaced apart so as to delimit, with the body (66), the peripheral channel (76) .

3. Aircraft according to Claim 2, **characterized in that** the first rib (68) is positioned at the level of the second edge (66.2) of the body (66) of the abutment (58), at a height greater than the second rib (74) and comprises an upper part (86) that is remote from the abutment (58) and is inclined towards the inside of the opening (48).

4. Aircraft according to one of the preceding claims, **characterized in that** the peripheral seal (56) comprises at least one outer rib (88) that projects with respect to the outer surface of the peripheral seal (56) and is configured to limit the degree to which the peripheral seal (56) enters the peripheral channel (76).

5. Aircraft according to Claims 3 and 4, **characterized in that** the outer rib (88) of the peripheral seal (56) is configured to bear against the upper part (86) of the first rib (68).

6. Aircraft according to one of the preceding claims, **characterized in that** the peripheral seal (56) comprises a hollow cylindrical body (60) having at least one orifice (64) so as to establish a communication between the inside of the hollow cylindrical body (60) and the inside of the second zone (44) of the fuselage (40).

7. Aircraft according to one of the preceding claims, **characterized in that** the opening (48) comprises an upper edge (48.1) arranged in a first longitudinal plane, a lower edge (48.2) arranged in a second longitudinal plane, first and second lateral edges (48.3, 48.4) arranged in transverse planes, and **in that** the abutment (58) comprises two ducts (78) positioned at the first lateral edge (48.3) and two ducts (78) positioned at the second lateral edge (48.4).

8. Aircraft according to one of the preceding claims, **characterized in that** the abutment (58) comprises at least one plate (90) having a first face (90.1) that is oriented towards the outside of the fuselage (30) and a second face (90.2) that is oriented towards the inside of the fuselage, each duct (78) being positioned in a bead (92) provided on the second face (90.2).
